Europäisches Patentamt

European Patent Office

Office européen des brevets

(11) Veröffentlichungsnummer : **0 144 557**
**B1**

(12) **EUROPÄISCHE PATENTSCHRIFT**

(45) Veröffentlichungstag der Patentschrift :
**10.02.88**

(21) Anmeldenummer : **84110652.9**

(22) Anmeldetag : **07.09.84**

(51) Int. Cl.⁴ : **B 29 C 47/06**, B 29 C 47/92 //
B29L30:00

(54) Vorrichtung zum Herstellen von aus verschiedenen plastischen Kautschuk- oder Kunststoffmischungen zusammengesetzten Profilsträngen.

(30) Priorität : **14.09.83 DE 3333105**

(43) Veröffentlichungstag der Anmeldung :
**19.06.85 Patentblatt 85/25**

(45) Bekanntmachung des Hinweises auf die Patenterteilung : **10.02.88 Patentblatt 88/06**

(84) Benannte Vertragsstaaten :
**AT BE CH DE FR GB IT LI LU NL SE**

(56) Entgegenhaltungen :
EP-A- 0 047 146
US-A- 2 569 373
US-A- 3 099 859

(73) Patentinhaber : **Continental Gummi-Werke Aktiengesellschaft**
**Königsworther Platz 1**
**D-3000 Hannover 1 (DE)**

(72) Erfinder : **de Vries, Gerhard, Dr. Dipl.-Ing.**
**Im Hespe 36**
**D-3008 Garbsen 4 (DE)**

## Beschreibung

Die Erfindung bezieht sich auf Vorrichtungen zum Herstellen von aus verschiedenen plastischen Kautschuk- oder Kunststoffmischungen zusammengesetzten Profilsträngen, mit wenigstens zwei über eine Vorschablone mit sich einander annähernden Strömungskanälen zu einem gemeinsamen Auspreßmundstück fördernden Schneckenstrangpressen mit jeweils eigenem Antriebsmotor (US-A-2 569 373).

Mehrschichtenprofilstränge wie beispielsweise Rohlaufstreifen für Fahrzeugluftreifen, die in dem mittleren Laufflächenbereich andere Eigenschaften als in den in die Reifenwände übergehenden Seitenbereichen aufweisen müssen, werden vorteilhaft durch unmittelbares Vereinigen der von verschiedenen Strangpressen geförderten Teilströme in dem gemeinsamen Mundstück einer zusammenhängend konstruierten einheitlichen Vorrichtung hergestellt. In der Praxis sind zwei und auch drei jeweils selbstständig angetriebene Schneckenstrangpressen enthaltende Vorrichtungen als sogenannte « Duplex » bzw. « Triplex »-Systeme in Gebrauch — siehe z. B. US-A-2 569 373 — und die weitere Vervielfachung zu « Quadroplex »-Anlagen ist denkbar und auch technisch möglich. Die einzelnen Strangpressen solcher Mehrfachvorrichtungen sind in aller Regel für verschiedene Förderkapazitäten ausgelegt, und dementsprechend treten in den anschließenden Strömungskanälen auch stark unterschiedliche Drücke auf. Beispielsweise in bekannten Duplex-Anlagen zum Herstellen von aus einer dünnen Unterplatte und einer wesentlich dickeren Oberplatte zusammengesetzten Laufstreifen für Luftreifen sind in dem Oberplattenmischungsstrom Druckwerte in einer Größenordnung um 70 bar, in dem Unterplattenmischungsstrom dagegen bis zu 150 bar gemessen worden. Da die Vorschablonen aufgrund der räumlichen Gegebenheiten und auch aus strömungstechnischen Gründen stets mit vergleichsweise schlank auslaufenden Trennzungen zwischen den Strömungskanälen ausgebildet sind, unterliegen diese Teile leicht der Gefahr bleibender Formänderungen als Folge einseitiger Druckeinwirkungen von solcher Höhe. Verbogene oder abgeknickte Trennzungen machen aber die betroffenen Vorschablonen für jeden weiteren Einsatz unbrauchbar und bedingen in jedem Falle kostenaufwendigen Austausch. Der Erfindung liegt demgegenüber als Aufgabe zugrunde, die Vorschablonen in Mehrfachstrangpreßanlagen vor Beschädigungen aus übermäßigen Druckbeanspruchungen zu schützen und die mit vorzeitigem Austauschen verbundenen Mehrkosten zu vermeiden.

Nach der Erfindung ist für Vorrichtungen der eingangs geschilderten Gattung vorgesehen, daß jeweils der Antriebsmotor der mit höheren Drücken fördernden Strangpresse in zeitlicher Aufeinanderfolge erst nach dem Antriebsmotor der mit niedrigeren Drücken fördernden Strangpresse einschaltbar und der Antriebsmotor der mit niedrigeren Drücken fördernden Strangpresse in zeitlicher Aufeinanderfolge erst nach dem Antriebsmotor der mit höheren Drücken fördernden Strangpresse ausschaltbar ist. In einer vorteilhaften Ausgestaltung des Erfindungsgedankens sind Drucksensoren den Strömungskanälen in der Vorschalbone zugeordnet und so in einen die Energiezuführung der Antriebsmotoren steuernden Regelkreis eingefügt, daß die Antriebsmotoren der Strangpressen in gegenseitiger Abhängigkeit nach Maßgabe eines wählbaren Differenzbetrages zwischen den durch die Drucksensoren ermittelten statischen Drücken der zusammenzuführenden Masseströme regelbar sind.

Mit der erfindungsgemäßen Vorrichtung wird die alleinige Einwirkung der jeweils mit höheren Preßdrücken fördernden Strangpresse auf die empfindlichen Trennzungen in der Vorschablone unter allen Umständen vermieden. Vielmehr wird unabhängig von allen Manipulationen sowohl in der Anfahrphase als auch beim Außerbetriebsetzen der Vorrichtung stets sichergestellt, daß vorrangig die Niederdruckpressen eingeschaltet sind bzw. bleiben und folglich auch immer nur der Differenzdruck in der Vorschablone wirksam ist, und vorzugsweise wird durch Regelung der die Strangpressen antreibenden Motoren sichergestellt, daß die Druckdifferenz der Masseströme in keiner Betriebsphase einen in Abhängigkeit von der Belastbarkeit der jeweils verwendeten Trennzungen wählbaren, für die Trennzungen unschädlichen Maximalwert überschreitet. Die Biegebeanspruchungen der Trennzungen halten sich daher in den zulässigen Grenzen und nehmen keine zu bleibenden Formänderungen führenden Spitzenwerte an. Die sonst mit hohen Kosten belasteten Folgen aus möglichen Bedienungsfehlern sind damit grundlegend in überraschend einfacher Weise ausgeschlossen.

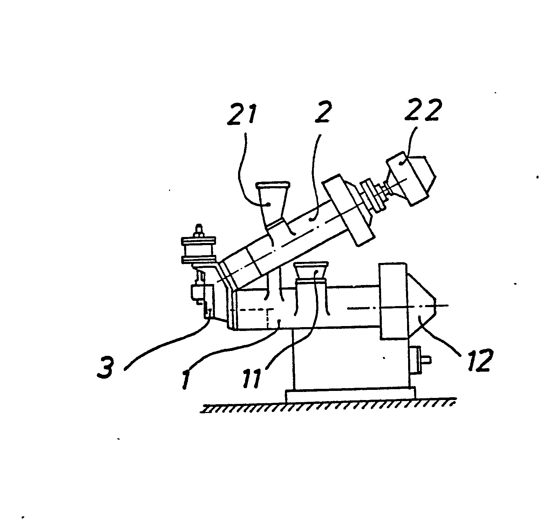

Die Erfindung ist anhand der schematischen Darstellung einer Duplex-Vorrichtung in der Zeichnung verdeutlicht. Die einzige Figur der Zeichnung zeigt die Vorrichtung in Umrissen in Seitenansicht.

Die gezeichnete Vorrichtung enthält zwei in Huckepack-Anordnung übereinandergesetzte Schneckenstrangpressen 1 und 2, die mit jeweils einem eigenen Einfülltrichter 11, 21 versehen sind und nach einem gemeinsamen Auspreßmundstück in dem beide Strangpressen verbindenden Preßkopf 3 hin fördern. Die Schnecken beider Strangpressen werden von zugeordneten angeflanschten Elektromotoren 12, 22 angetrieben. In der angenommenen Verwendung der Vorrichtung zum Herstellen von Rohlaufstreifen für Fahrzeugluftreifen dient die gleichzeitig das Fundament bildende, im wesentlichen waagerecht ausgerichtete untere Strangpresse 1 zum Formen der zwar dünnen aber breiten Unterplatte, während die unter einem spitzen Winkel fest auf dieser angebrachte obere Strangpresse 2 das Material für die Lauffläche liefert. Die rheologischen Gegebenheiten bringen es mit sich, daß die plastifizierte Masse aus der Strangpresse 1 mit einem bis über doppelt so hohen Druck wie aus der oberen Strangpresse 2 austritt.

Erfindungsgemäß sind die Elektromotoren 12, 22 in gegenseitiger Abhängigkeit derart untereinander geschaltet, daß die Unterpresse 1 nicht vor der Oberpresse 2 angefahren und die letztere nicht vor der Unterpresse 1 außer Betrieb gesetzt werden kann. Die zeitliche Aufeinanderfolge kann mit bekannten elektrischen Schaltmitteln sichergestellt werden, wobei der Einschaltzeitpunkt des unteren Pressenmotors 12 auch von einer unmittelbaren Mindestdruckanzeige in dem zugeordneten Strömungskanal der Vorschablone im Preßkopf 3 abhängig gemacht werden kann.

**Patentansprüche**

1. Vorrichtung zum Herstellen von aus verschiedenen plastischen Kautschuk- oder Kunststoffmischungen zusammengesetzten Profilsträngen, mit wenigstens zwei über eine Vorschablone mit sich einander annähernden Strömungskanälen zu einem gemeinsamen Auspreßmundstück fördernden Schneckenstrangpressen mit jeweils eigenem Antriebsmotor, dadurch gekennzeichnet, daß der Antriebsmotor (12) der mit höheren Drücken fördernden Strangpresse (1) in zeitlicher Aufeinanderfolge erst nach dem Antriebsmotor (22) der mit niedrigeren Drücken fördernden Strangpresse (2) einschaltbar und der Antriebsmotor (22) der mit niedrigeren Drücken fördernden Strangpresse (2) erst nach dem Antriebsmotor (12) der mit höheren Drücken fördernden Strangpresse (1) ausschaltbar ist.

2. Vorrichtung nach Anspruch 1, dadurch gekennzeichnet, daß Drucksensoren den Strömungskanälen in der Vorschablone zugeordnet und in einen die Energiezuführung der Antriebsmotoren (12, 22) steuernden Regelkreis so eingefügt sind, daß die Antriebsmotoren (12, 22) der Strangpressen (1, 2) in gegenseitiger Abhängigkeit nach Maßgabe eines wählbaren Differenzbetrages zwischen den durch die Drucksensoren ermittelten statischen Drücken der zusammenzuführenden Masseströme regelbar sind.

**Claims**

1. Apparatus for producing extruded profiles composed of various plastic rubber or plastics material mixtures, having at least two screw extrusion presses which have their own individual driving motor and convey material to a common extrusion nozzle via a front template having converging flow channels, characterised in that the driving motor (12) of the extrusion press (1), which conveys material at higher pressures, can be switched-on in a time sequence only after the driving motor (22) of the extrusion press (2), which conveys material at lower pressures, and the driving motor (22) of the extrusion press (2), which conveys material at lower pressures, can only be switched-off after the driving motor (12) of the extrusion press (1), which conveys material at higher pressures.

2. Apparatus according to claim 1, characterised in that pressure sensors are associated with the flow channels in the front template and are introduced into a control system, which controls the supply of energy to the driving motors (12, 22), so that the driving motors (12, 22) of the extrusion presses (1, 2) can be controlled in mutual dependence in accordance with a selectable differential amount between the static pressures, determined by the pressure sensors, of the mass flows which are to be brought together..

**Revendications**

1. Dispositif pour la fabrication de profilés composés de différents mélanges plastiques, de caoutchouc ou de matières plastiques, comprenant au moins deux extrudeuses dont chacune est munie de son moteur d'entraînement propre et refoule, à travers une filière de répartition possédant des canaux d'écoulement qui se rapprochent les uns des autres, vers une filière commune, caractérisé en ce que le moteur d'entraînement (12) de l'extrudeuse (1) qui refoule avec des pressions plus élevées ne peut être mis en circuit, dans l'ordre de succession dans le temps qu'après le moteur d'entraînement (22) de l'extrudeuse (2) qui refoule avec des pressions plus basses, et que le moteur d'entraînement (22) de l'extrudeuse (2) qui refoule avec des pressions plus basses ne peut être mis hors circuit qu'après le moteur d'entraînement (12) de l'extrudeuse (1) qui refoule avec des pressions plus élevées.

2. Dispositif selon la revendication 1, caractérisé en ce que des capteurs de pressions sont associés aux canaux d'écoulement formés dans la filière de répartition et sont intercalés dans un circuit de réglage qui commande la transmission de l'énergie aux moteurs (12, 22) de telle manière que les moteurs d'entraînement (12, 22) des extrudeuses (1, 2) puissent être réglés, l'un par rapport à l'autre, en fonction d'une valeur de différence choisie entre les pressions statiques des courants des matières à réunir, qui sont captées par les capteurs de pression.